# EUROPEAN PATENT APPLICATION

(11) **EP 3 249 461 A1**
(43) Date of publication of application: **29.11.2017**
(21) Application number: 15858875.6
(22) Date of filing: 13.11.2015
(51) Int. Cl.: G03B 15/05, H05B 37/02

(54) **DIGITAL STUDIO PHOTOGRAPHY LIGHTING SYSTEM**

(30) Priority: 14.11.2014 CN 201410650503
(71) Applicant: Niu, Qiang, Shenzhen, Guangdong 518000 (CN)
(72) Inventor: WU, Jieyang, Shenzhen, Guangdong 518000 (CN); YU, Changxin, Shenzhen, Guangdong 518000 (CN)
(74) Representative: ZHAOffice SPRL
(86) International application number: PCT/CN2015/094595
(87) International publication number: WO 2016/074645

(57) **Abstract**

A digital studio photography lighting system comprises: a red primary light source (220), a green primary light source (320), a blue primary light source (420), a red light controller (210), a green light controller (310), a blue light controller (410), an instruction receiving device (400), used for receiving a color instruction input by a user, and a matching controller (100), used for separately generating red, green, and blue light color temperature control signals and red, green, and blue light energy control signals according to the color instruction. A color temperature of a light source can be adjusted as required by implementing the digital studio photography lighting system, so that lighting requirements under different environmental conditions in a digital studio are met.

## Description

### TECHNICAL FIELD

The present disclosure relates generally to a photography field, and more particularly, to a digital studio photography lighting system.

### BACKGROUND

The traditional studio system basically implements the photography with canvas by using the traditional lighting technology. However, the digital studio photography lighting system now available normally employs the white light source with a fixed color temperature which cannot be adjusted according to the change of ambient light, such that the light quantity and color temperature of the flashing light cannot meet the requirements of the digital photography studio under different environmental conditions.

### SUMMARY

The object of the present application is to provide a digital studio photography lighting system whose light color is adjustable thus meeting the light requirements of the digital photography studio under different environmental conditions, aiming at the technical problem that the digital studio photography lighting system now available normally employs the white light source with a fixed color temperature which cannot be adjusted according to the change of ambient light, such that the light quantity and color temperature of the flashing light cannot meet the requirements of the digital photography studio under different environmental conditions.

In one aspect, a digital studio photography lighting system is provided, which comprising:
a red primary light source, a green primary light source and a blue primary light source;
an instruction receiving device, which is used for receiving a color instruction input by a user;
a matching controller, which is used for separately generating a red light color temperature control signal, a red light energy control signal, a green light color temperature control signal, a green light energy control signal, a blue light color temperature control signal and a blue light energy control signal according to the color instruction;
a red light controller, which is used for controlling a color temperature and light energy of a red light emitted by the red primary light source according to the red light color temperature control signal and the red light energy control signal;
a green light controller, which is used for controlling a color temperature and light energy of a green light emitted by the green primary light source according to the green light color temperature control signal and the green light energy control signal;
a blue light controller, which is used for controlling a color temperature and light energy of a blue light emitted by the blue primary light source according to the blue light color temperature control signal and the blue light energy control signal.

Preferably, in the digital studio photography lighting system according to the present application, the matching controller further comprises:
a color temperature controlling module, which is used for separately generating the red light color temperature control signal, the green light color temperature control signal and the blue light color temperature control signal according to the color instruction;
an energy ratio generating module, which is used for determining an energy ratio of the red light, the green light and the blue light according to the color instruction;
an energy controlling module, which is used for generating the red light energy control signal, the green light energy control signal and the blue light energy control signal according to the energy ratio.

Preferably, in the digital studio photography lighting system according to the present application, the matching controller further comprises:
a color temperature and energy database, which is used for storing a plurality of red light color temperatures, green light color temperatures and blue light color temperatures, red light energy, green light energy and blue light energy in a form of a look-up table;
a color lookup module, which is used for generating the red light color temperature control signal, the green light color temperature control signal and the blue light color temperature control signal by looking up corresponding red light color temperature, green light color temperature and blue light color temperature according to the color instruction;
an energy ratio lookup module, which is used for looking up corresponding energy ratio of the red light, the green light and the blue light;
an energy generating module, which is used for generating the red light energy control signal, the green light energy control signal and the blue light energy control signal according to the energy ratio.

Preferably, in the digital studio photography lighting system according to the present application, the matching controller further comprises an updating module which is used for updating the plurality of red light color temperatures, green light color temperatures and blue light color temperatures, red light energy, green light energy and blue light energy in the color temperature and energy database.

Preferably, the digital studio photography lighting system according to the present application further comprises a flash device used for generating a flash signal based on a received flash triggering.

Preferably, in the digital studio photography lighting system according to the present application, the matching controller further comprises:
a flash control module, which is used for generating a pulse signal with a high geometric lightness according to the flash signal;
wherein the red light controller, the green light controller and the blue light controller, are used for controlling the red primary light source, the green primary light source and the blue primary light source to emit the red light, the green light and the blue light according to the pulse signal with a high geometric lightness, respectively, wherein the red light, the green light and the blue light have high geometric lightness.

Preferably, in the digital studio photography lighting system according to the present application, the pulse signal with a high geometric lightness has a pulse interval range of 1ms-100ms.

Preferably, in the digital studio photography lighting system according to the present application, the red light controller comprises a red light PWM generating module which is used for generating a PWM control signal for controlling the red primary light source according to the red light color temperature control signal and the red light energy control signal; the green light controller comprises a green light PWM generating module which is used for generating a PWM control signal for controlling the green primary light source according to the green light color temperature control signal and the green light energy control signal; and the blue light controller comprises a blue light PWM generating module which is used for generating a PWM control signal for controlling the blue primary light source according to the blue light color temperature control signal and the blue light energy control signal.

Preferably, in the digital studio photography lighting system according to the present application, the matching controller further comprises a power interruption processing module which is used for storing current red light color temperature control signal, current red light energy control signal, current green light color temperature control signal, current green light energy control signal, current blue light color temperature control signal and current blue light energy control signal before a power supply is interrupted and directly calling stored red light color temperature control signal, stored red light energy control signal, stored green light color temperature control signal, stored green light energy control signal, stored blue light color temperature control signal and stored blue light energy control signal when the power supply is reconnected.

Preferably, in the digital studio photography lighting system according to the present application, the red primary light source is a red LED, the green primary light source is a green LED, and the blue primary light source is a blue LED.

When implementing the digital studio photography lighting system according to the present application, the light colors of the light sources can be adjusted thus meeting the light requirements of the digital photography studio under different environmental conditions. Furthermore, the illumination time of the subject can be controlled by generating the pulse signal with a high geometric lightness, such that the image quality problem caused by the photography shaking can be effectively avoided.

### BRIEF DESCRIPTION OF THE DRAWINGS

The present application is further illustrated combining the embodiments and drawings attached.
FIG. 1 is a diagrammatic view showing the digital studio photography lighting system according to a first embodiment of the present application.
FIG. 2 is a diagrammatic view showing the digital studio photography lighting system according to a second embodiment of the present application.
FIG. 3 is a diagrammatic view showing the digital studio photography lighting system according to a third embodiment of the present application.

### DETAILED DESCRIPTION OF THE PREFERRED EMBODIMENT

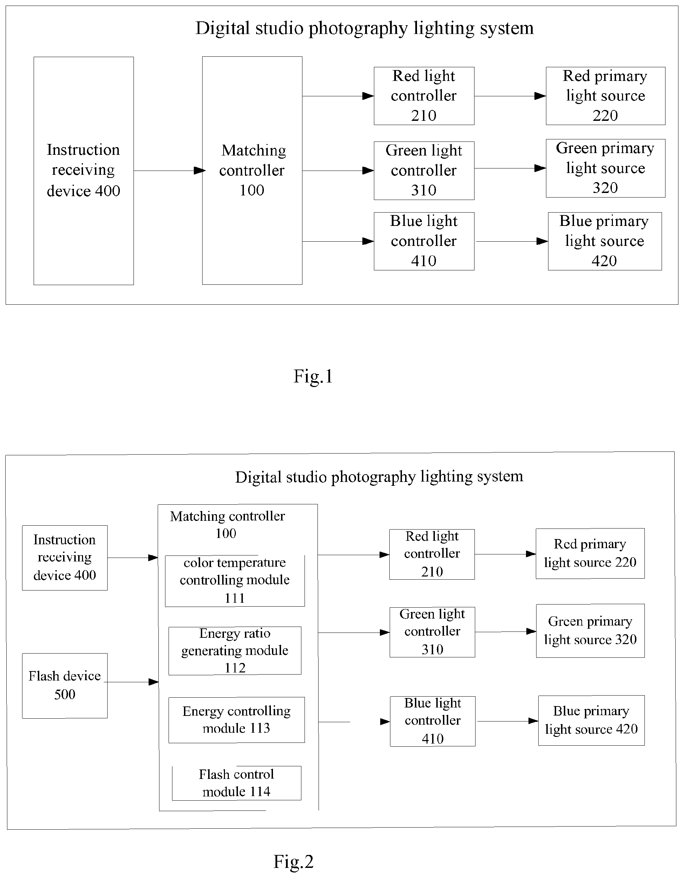

FIG. 1 is a diagrammatic view showing the digital studio photography lighting system according to a first embodiment of the present application. As shown in FIG. 1, the digital studio photography lighting system of the present application comprises a red primary light source 220, a green primary light source 320, a blue primary light source 420, a red light controller 210, a green light controller 310, a blue light controller 410, an instruction receiving device 400 and a matching controller 100.

The instruction receiving device 400 is used for receiving a color instruction input by a user. For example, the instruction receiving device 400 can be a keyboard group for immediately responding the keyboard group triggering signal. The matching controller 100 is used for separately generating a red light color temperature control signal, a red light energy control signal, a green light color temperature control signal, a green light energy control signal, a blue light color temperature control signal and a blue light energy control signal according to the color instruction. For example, in one embodiment of the present application, multiple groups of red light color temperature control signals, red light energy control signals, green light color temperature control signals, green light energy control signals, blue light color temperature control signals and blue light energy control signals are stored in the matching controller 100 in the form of a look-up table. When receiving the color instruction, the matching controller 100 selects a group of red light color temperature control signal, red light energy control signal, green light color temperature control signal, green light energy control signal, blue light color temperature control signal and blue light energy control signal corresponding to the color instruction. For example, in another embodiment of the present application, the instruction receiving device 400 receives a data signal comprising a desired color temperature and lightness. The matching controller 100 converts such desired color temperature and lightness signal into the red light color temperature control signal, the red light energy control signal, the green light color temperature control signal, the green light energy control signal, the blue light color temperature control signal and the blue light energy control signal by using the common known conversion functions after receiving the same. The red light controller 210 is electrically connected to the matching controller 100 for controlling the color temperature and light energy of the red light emitted by the red primary light source 220 according to the red light color temperature control signal and the red light energy control signal. The green light controller 310 is electrically connected to the matching controller 100 for controlling the color temperature and light energy of the green light emitted by the green primary light source 320 according to the green light color temperature control signal and the green light energy control signal. The blue light controller 410 is electrically connected to the matching controller 100 for controlling the color temperature and light energy of the blue light emitted by the blue primary light source 420 according to the blue light color temperature control signal and the blue light energy control signal. In the present application, the red light controller 210, the green light controller 310 and the blue light controller 410 are red LED driving circuit, green LED driving circuit and blue LED driving circuit, respectively. Furthermore, the red primary light source 220 is a red LED, the green primary light source 320 is a green LED, and the blue primary light source 420 is a blue LED. The generated red light, green light and blue light are mixed together, that is, the light of a low lightness satisfying the actual color requirement is generated.

When implementing the digital studio photography lighting system according to the present application, the light colors of the light sources can be adjusted thus meeting the light requirements of the digital photography studio under different environmental conditions.

FIG. 2 is a diagrammatic view showing the digital studio photography lighting system according to a second embodiment of the present application. As shown in Fig.2, the digital studio photography lighting system of the present application comprises a red primary light source 220, a green primary light source 320, a blue primary light source 420, a red light controller 210, a green light controller 310, a blue light controller 410, an instruction receiving device 400, a matching controller 100 and a flash device 500. In the present embodiment, the matching controller 100 further comprises a color temperature controlling module 111, an energy ratio generating module 112, an energy controlling module 113 and a flash control module 114.

The instruction receiving device 400 is used for receiving a color instruction input by a user. For example, the instruction receiving device 400 can be a keyboard group for immediately responding the keyboard group triggering signal. The color temperature controlling module 111 is used for separately generating the red light color temperature control signal, the green light color temperature control signal and the blue light color temperature control signal according to the color instruction. For example, the color temperature controlling module 111 can convert the color instruction into the red light color temperature control signal, the green light color temperature control signal and the blue light color temperature control signal by using the common known color temperature conversion function. The red light controller 210, the green light controller 310 and the blue light controller 410, are used for controlling the color temperatures of the red primary light source 220, the green primary light source 320 and the blue primary light source 420 according to the red light color temperature control signal, the green light color temperature control signal and the blue light color temperature control signal. The energy ratio generating module 112 is used for determining an energy ratio of the red light, the green light and the blue light according to the color instruction. For example, the energy ratio generating module 112 can convert the color instruction into the energy ratio of the red light, the green light and the blue light by using the common known energy ratio conversion function. The energy controlling module 113 is used for converting the energy ratio into the red light energy control signal, the green light energy control signal and the blue light energy control signal. The red light controller 210, the green light controller 310 and the blue light controller 410, are used for controlling the energy of the red primary light source 220, the green primary light source 320 and the blue primary light source 420 according to the red light energy control signal, the green light energy control signal and the blue light energy control signal, respectively. The generated red light, green light and blue light are mixed together, that is, the light of a low lightness satisfying the actual color requirement is generated.

If the flash device 500 is trigged, it would generate a flash signal based on received flash triggering, and send this flash signal to the flash control module 114 which is used for generating a pulse signal with a high geometric lightness according to the flash signal and sending such pulse signal with a high geometric lightness to the red light controller 210, the green light controller 310 and the blue light controller 410. At this time, the red light controller 210, the green light controller 310 and the blue light controller 410 are used for controlling the red primary light source 220, the green primary light source 320 and the blue primary light source 420 to emit the red light, the green light and the blue light according to the pulse signal with a high geometric lightness, respectively, wherein the red light, the green light and the blue light have high geometric lightness. The emitting time interval of the red light, the blue light and the green light with the high geometric lightness and the pulse interval of the pulse signal with the high geometric lightness have a same range of 1ms-100ms. When the pulse signal with the high geometric lightness starts, the red primary light source 220, the green primary light source 320 and the blue primary light source 420 emit the red light, the green light and the blue light have high geometric lightness. When the pulse signal with the high geometric lightness ends, the red primary light source 220, the green primary light source 320 and the blue primary light source 420 turn off. The generated red light, green light and blue light are mixed together, that is, the light of a high lightness satisfying the actual color requirement is generated.

When implementing the digital studio photography lighting system according to the present application, the light colors of the light sources can be adjusted thus meeting the light requirements of the digital photography studio under different environmental conditions. Furthermore, the illumination time of the subject can be controlled by generating the pulse signal with a high geometric lightness, such that the image quality problem caused by the photography shaking can be effectively avoided.

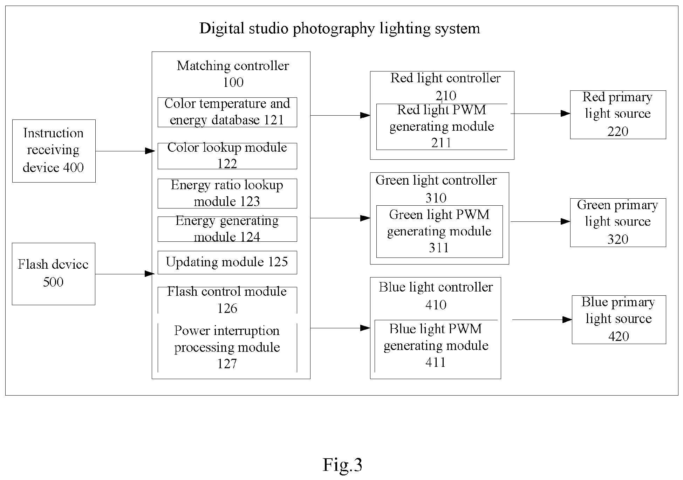

FIG. 3 is a diagrammatic view showing the digital studio photography lighting system according to a third embodiment of the present application. As shown in Fig.3, the digital studio photography lighting system of the present application comprises a red primary light source 220, a green primary light source 320, a blue primary light source 420, a red light controller 210, a green light controller 310, a blue light controller 410, an instruction receiving device 400, a matching controller 100 and a flash device 500. In the present embodiment, the matching controller 100 further comprises a color temperature and energy database 121, a color lookup module 122, an energy ratio lookup module 123, an energy generating module 124, an updating module 125 and a flash control module 126. The red light controller 210 comprises a red light PWM generating module 211. The green light controller 310 comprises a green light PWM generating module 311. The blue light controller 410 comprises a blue light PWM generating module 411.

The instruction receiving device 400 is used for receiving a color instruction input by a user. For example, the instruction receiving device 400 can be a keyboard group for immediately responding the keyboard group triggering signal. The color temperature and energy database 121 is used for storing a plurality of red light color temperatures, green light color temperatures and blue light color temperatures, red light energy, green light energy and blue light energy in a form of a look-up table. The updating module 125 is used for updating the plurality of red light color temperatures, green light color temperatures and blue light color temperatures, red light energy, green light energy and blue light energy in the color temperature and energy database 121. The color lookup module 122 is used for generating the red light color temperature control signal, the green light color temperature control signal and the blue light color temperature control signal by looking up corresponding red light color temperature, green light color temperature and blue light color temperature according to the color instruction. The energy ratio lookup module 123 is used for looking up corresponding energy ratio of the red light, the green light and the blue light according to the color instruction. The energy generating module 124 is used for generating the red light energy control signal, the green light energy control signal and the blue light energy control signal according to the energy ratio. The PWM generating module 211, the green light PWM generating module 311 and the blue light PWM generating module 411 in the red light controller 210, the green light controller 310 and the blue light controller 410 respectively are used for generating the PWM control signals controlling the red primary light source 220, the green primary light source 320 and the blue primary light source 420. Based on such PWM signals, the red light controller 210, the green light controller 310 and the blue light controller 410 can control the energy of the red light, the green light and the blue light emitted by the red primary light source 220, the green primary light source 320 and the blue primary light source 420, respectively. The generated red light, green light and blue light are mixed together, that is, the light of a low lightness satisfying the actual color requirement is generated.

If the flash device 500 is trigged, it would generate a flash signal based on received flash triggering, and send this flash signal to the flash control module 114 which is used for generating a pulse signal with a high geometric lightness according to the flash signal and sending such pulse signal with a high geometric lightness to the red light controller 210, the green light controller 310 and the blue light controller 410. At this time, the red light controller 210, the green light controller 310 and the blue light controller 410 are used for controlling the red primary light source 220, the green primary light source 320 and the blue primary light source 420 to emit the red light, the green light and the blue light according to the pulse signal with a high geometric lightness, respectively, wherein the red light, the green light and the blue light have high geometric lightness. The emitting time interval of the red light, the blue light and the green light with the high geometric lightness and the pulse interval of the pulse signal with the high geometric lightness have a same range of 1ms-100ms. When the pulse signal with the high geometric lightness starts, the red primary light source 220, the green primary light source 320 and the blue primary light source 420 emit the red light, the green light and the blue light have high geometric lightness. When the pulse signal with the high geometric lightness ends, the red primary light source 220, the green primary light source 320 and the blue primary light source 420 turn off. The generated red light, green light and blue light are mixed together, that is, the light of a high lightness satisfying the actual color requirement is generated.

In the present embodiment, the matching controller 100 further comprises a power interruption processing module 127 which is used for storing current red light color temperature control signal, current red light energy control signal, current green light color temperature control signal, current green light energy control signal, current blue light color temperature control signal and current blue light energy control signal before a power supply is interrupted and directly calling stored red light color temperature control signal, stored red light energy control signal, stored green light color temperature control signal, stored green light energy control signal, stored blue light color temperature control signal and stored blue light energy control signal when the power supply is reconnected.

When implementing the digital studio photography lighting system according to the present application, the light colors of the light sources can be adjusted thus meeting the light requirements of the digital photography studio under different environmental conditions. Furthermore, the illumination time of the subject can be controlled by generating the pulse signal with a high geometric lightness, such that the image quality problem caused by the photography shaking can be effectively avoided. Furthermore, the stored color temperature and energy data can be updated, such that the user can input the color temperature and energy data according to the actual requirements. Furthermore, after the power failure or last use, the data used in the last time can be automatically matched, thus further facilitating the use.

The foregoing is a further detailed description of the present application in connection with specific preferred embodiments, and cannot be considered as that the specific implementation of the present application is limited to these illustrations. It will be apparent to those skilled in the art that any various modifications or substitutions may be made to the present application without departing from the spirit of the invention, and such modifications or substitutions should be considered as falling within the scope of the present application.

## Claims

1. A digital studio photography lighting system comprising:
a red primary light source, a green primary light source and a blue primary light source;
an instruction receiving device, which is used for receiving a color instruction input by a user;
a matching controller, which is used for separately generating a red light color temperature control signal, a red light energy control signal, a green light color temperature control signal, a green light energy control signal, a blue light color temperature control signal and a blue light energy control signal according to the color instruction;
a red light controller, which is used for controlling a color temperature and light energy of a red light emitted by the red primary light source according to the red light color temperature control signal and the red light energy control signal;
a green light controller, which is used for controlling a color temperature and light energy of a green light emitted by the green primary light source according to the green light color temperature control signal and the green light energy control signal;
a blue light controller, which is used for controlling a color temperature and light energy of a blue light emitted by the blue primary light source according to the blue light color temperature control signal and the blue light energy control signal.

2. The digital studio photography lighting system according to claim 1, wherein the matching controller further comprises:
a color temperature controlling module, which is used for separately generating the red light color temperature control signal, the green light color temperature control signal and the blue light color temperature control signal according to the color instruction;
an energy ratio generating module, which is used for determining an energy ratio of the red light, the green light and the blue light according to the color instruction;
an energy controlling module, which is used for generating the red light energy control signal, the green light energy control signal and the blue light energy control signal according to the energy ratio.

3. The digital studio photography lighting system according to claim 1, wherein the matching controller further comprises:
a color temperature and energy database, which is used for storing a plurality of red light color temperatures, green light color temperatures and blue light color temperatures, red light energy, green light energy and blue light energy in a form of a look-up table;
a color lookup module, which is used for generating the red light color temperature control signal, the green light color temperature control signal and the blue light color temperature control signal by looking up corresponding red light color temperature, green light color temperature and blue light color temperature according to the color instruction;
an energy ratio lookup module, which is used for looking up corresponding energy ratio of the red light, the green light and the blue light according to the color instruction;
an energy generating module, which is used for generating the red light energy control signal, the green light energy control signal and the blue light energy control signal according to the energy ratio.

4. The digital studio photography lighting system according to claim 3, wherein the matching controller further comprises:
an updating module which is used for updating the plurality of red light color temperatures, green light color temperatures and blue light color temperatures, red light energy, green light energy and blue light energy in the color temperature and energy database.

5. The digital studio photography lighting system according to any one of claims 1-4, wherein further comprising a flash device used for generating a flash signal based on a received flash triggering.

6. The digital studio photography lighting system according to claim 5, wherein the matching controller further comprises:
a flash control module, which is used for generating a pulse signal with a high geometric lightness according to the flash signal;
wherein the red light controller, the green light controller and the blue light controller, are used for controlling the red primary light source, the green primary light source and the blue primary light source to emit the red light, the green light and the blue light according to the pulse signal with a high geometric lightness, respectively, wherein the red light, the green light and the blue light have high geometric lightness.

7. The digital studio photography lighting system according to claim 6, wherein the pulse signal with a high geometric lightness has a pulse interval range of 1ms-100ms.

8. The digital studio photography lighting system according to claim 5, wherein the red light controller comprises a red light PWM generating module which is used for generating a PWM control signal for controlling the red primary light source according to the red light color temperature control signal and the red light energy control signal; the green light controller comprises a green light PWM generating module which is used for generating a PWM control signal for controlling the green primary light source according to the green light color temperature control signal and the green light energy control signal; and the blue light controller comprises a blue light PWM generating module which is used for generating a PWM control signal for controlling the blue primary light source according to the blue light color temperature control signal and the blue light energy control signal.

9. The digital studio photography lighting system according to claim 5, wherein the matching controller further comprises a power interruption processing module which is used for storing current red light color temperature control signal, current red light energy control signal, current green light color temperature control signal, current green light energy control signal, current blue light color temperature control signal and current blue light energy control signal before a power supply is interrupted and directly calling stored red light color temperature control signal, stored red light energy control signal, stored green light color temperature control signal, stored green light energy control signal, stored blue light color temperature control signal and stored blue light energy control signal when the power supply is reconnected.

10. The digital studio photography lighting system according to claim 9, wherein the red primary light source is a red LED, the green primary light source is a green LED, and the blue primary light source is a blue LED.
